# FASCICULE DE BREVET EUROPEEN

(11) **EP 3 874 691 B1**
(45) Date de publication et mention de la délivrance du brevet: **28.12.2022**
(21) Numéro de dépôt: 19868186.8
(22) Date de dépôt: 27.11.2019
(51) Int. Cl.: H04L 43/028

(54) **PROCÉDÉ DE MESURE D'UN DÉLAI DE TRANSMISSION AVEC MAÎTRISE DE DEGRÉS DE CONTENTION APPLIQUÉS À UNE TRAME DE DONNÉES**
VERFAHREN ZUR MESSUNG EINER ÜBERTRAGUNGSVERZÖGERUNG MIT KONTROLLE DER AUF EINEN DATENRAHMEN ANGEWENDETEN KONFLIKTGRADE
METHOD FOR MEASURING A TRANSMISSION DELAY WITH CONTROL OF DEGREES OF CONTENTION APPLIED TO A DATA FRAME

(30) Priorité: 10.12.2018 FR 1872616
(43) Date de publication de la demande: 08.09.2021
(73) Titulaire: Commissariat à l'Energie Atomique et aux Energies Alternatives, 75015 Paris (FR)
(72) Inventeur: JAN, Mathieu, 75012 PARIS (FR)
(74) Mandataire: Brevalex
(86) Numéro de dépôt international: PCT/FR2019/052820
(87) Numéro de publication internationale: WO 2020/120858

(56) Documents cités:
- WO-A2-2005/029228
- LIU MENG ET AL: "Buffer-Aware Analysis for Worst-Case Traversal Time of Real-Time Traffic over RRA-based NoCs", 2017 25TH EUROMICRO INTERNATIONAL CONFERENCE ON PARALLEL, DISTRIBUTED AND NETWORK-BASED PROCESSING (PDP), IEEE, 6 mars 2017 (2017-03-06), pages 567-575, XP033089765, DOI: 10.1109/PDP.2017.37
- SONI AAKASH ET AL: "Integrating Offset in Worst Case Delay Analysis of Switched Ethernet Network With Deficit Round Robbin", 2018 IEEE 23RD INTERNATIONAL CONFERENCE ON EMERGING TECHNOLOGIES AND FACTORY AUTOMATION (ETFA), IEEE, vol. 1, 4 septembre 2018 (2018-09-04), pages 353-359, XP033426051, DOI: 10.1109/ETFA.2018.8502523

## Description

### DOMAINE TECHNIQUE

Le domaine de l'invention est celui de la mesure d'un temps de transmission d'une trame de données depuis un nœud source jusqu'à un nœud destinataire d'un réseau informatique, et plus particulièrement celui de la mesure d'un délai de transmission pire cas de bout en bout du chemin (délai dit WCTT pour « Worst-Case Traversai Time »).

### TECHNIQUE ANTÉRIEURE

Dans une architecture informatique distribuée, différentes applications s'échangent des informations à travers un réseau. Un comportement correct de ces échanges se doit d'être garanti ce qui signifie du point de vue du réseau que lorsqu'une information y est transmise, elle doit arriver à destination dans les délais. Dans un contexte temps réel strict, un résultat juste mais hors-délai est un résultat inutilisable. Il s'avère donc nécessaire d'apporter une garantie relative à un temps de transmission de bout en bout, notamment via un majorant d'un tel temps de transmission dit délai de transmission pire cas de bout en bout (WCTT). Les flux réseau considérés peuvent être échangés entre des nœuds, qu'ils soient mono-processeurs ou multi-processeurs, interconnectés par un réseau, par exemple de type Ethernet, mais également au sein de nœuds d'une architecture pluri-cœurs (« many-core ») interconnectés par un réseau sur puce (« Network on Chip », NoC).

Lorsque plusieurs flux sont susceptibles de parcourir un même réseau, le calcul de tels délais de bout en bout est un problème complexe car, à la latence technologique (dépendant des équipements utilisés) et à la transmission proprement dite (variant en fonction du débit des liens) vient s'ajouter un temps d'attente dans les files de routeurs qui dépend de la présence ou de l'absence d'autres flux utilisant le même support de transmission en sortie d'un routeur (on parle alors de flux en contention ou encore de flux en concurrence de transmission).

La détermination du WCTT peut être réalisée de manière analytique en utilisant différentes méthodes de calcul, telles que par exemple le calcul réseau, l'approche par trajectoire, la vérification de modèles, la théorie des files d'attentes ou encore le calcul récursif. Le choix d'une méthode par rapport à une autre dépend principalement du besoin d'obtenir des temps de transmission pire cas ou non et de la possibilité d'appliquer correctement la méthode de calcul au réseau considéré. Il est toutefois possible d'appliquer une méthode de calcul même lorsque toutes ses conditions d'application ne sont pas satisfaites au moyen d'abstractions appropriées, mais au prix d'engendrer des sur-approximations dans les valeurs de délai de bout en bout calculées. Par ailleurs, la complexité de la méthode de calcul est un critère d'évaluation important pour s'assurer de son application en pratique sur des cas concrets. Une technique classique pour réduire cette complexité est d'abstraire le fonctionnement du réseau mais toujours au prix d'engendrer des sur-approximations sur les valeurs calculées.

Une alternative à ces méthodes analytiques consiste à observer les temps de transmission de bout en bout de flux, par simulation ou directement sur le système réel. Toutefois, cette approche ne permet pas de garantir l'obtention d'une valeur pire cas du fait de la difficulté à démontrer que l'ensemble des possibilités a été couvert ou tout simplement de garantir que la configuration du système génère bien un tel pire cas en pratique. La publication scientifique de LIU MENG ET AL: "Buffer-Aware Analysis for Worst-Case Traversai Time of Real-Time Traffic over RRA-based NoCs",2017 25TH Euromicro International Conférence on parallel, distributed and network based processing (PDP), IEEE du 6 mars 2017, pages 567-575 divulgue une méthode de calcul d'un tel temps de transmission de bout en bout.

### EXPOSÉ DE L'INVENTION

L'invention a pour objectif de proposer une technique de mesure d'un temps de transmission de bout en bout qui puisse offrir l'assurance d'observer les conditions d'obtention d'une transmission pire cas et qui permette de déterminer une valeur pire cas exacte.

A cet effet, l'invention propose un procédé de transmission de trame de données selon la revendication 1.

Les revendications dépendantes proposent des modes de réalisation préférés de l'invention.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence au dessin annexé sur lequel :

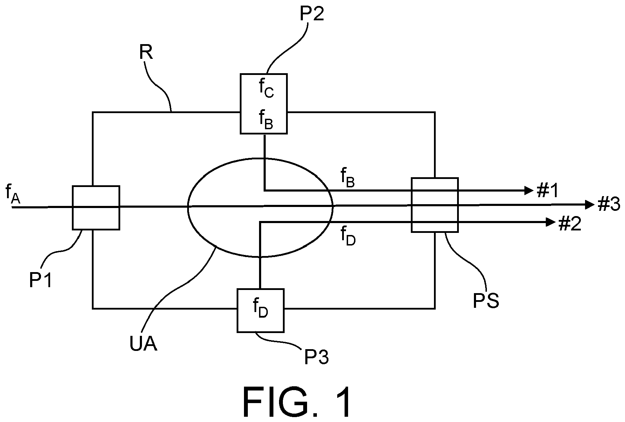

[Fig. 1] illustre un exemple de mise en œuvre du procédé selon l'invention avec une politique d'arbitrage de type tourniquet.

### DESCRIPTION DÉTAILLÉE

L'invention porte sur un procédé de transmission d'une trame de données sur un chemin reliant un nœud source à un nœud destinataire. Lors de sa transmission sur son chemin, cette trame peut être en contention avec d'autres trames, i.e. bloquée par ces trames. Deux trames sont dites en contention directe lorsque l'intersection de leurs chemins est non vide. Lorsque l'intersection de leurs chemins est vide, deux trames peuvent être en situation de contention indirecte via une troisième trame. Pour ce faire, cette troisième trame a avec chacun des deux autres trames une intersection non vide en termes de chemins.

D'une manière générale, l'invention propose de réaliser une mesure du temps de transmission de bout en bout d'une trame cible depuis son nœud source jusqu'à son nœud destinataire alors que le degré de contention subi par la trame cible à chaque progression vers le nœud destinataire, i.e. à chaque routeur rencontré sur son chemin, est contrôlé. L'invention propose plus particulièrement d'influencer la politique d'arbitrage implémentée sur chacun des routeurs rencontrés par la trame cible en venant indiquer des trames qui devront systématiquement être transmises avant la trame cible et ainsi générer d'une manière maîtrisée des contentions directes et indirectes sur la trame cible au cours de la mesure. Il est de la sorte possible d'obtenir des enveloppes de temps de transmission de bout en bout pour la trame cible. Si le degré de contention subi par la trame cible est maximal, le temps de transmission de bout en bout obtenu est alors une valeur pire cas.

Le mode d'exécution de l'arbitrage implémenté par les routeurs conformément à l'invention n'est accessible que dans une configuration du système distribué spécifique et protégée de toute utilisation non autorisée. Pour ce faire, ce mode d'exécution peut simplement être uniquement présent lors de la phase de conception du système ou sécurisé par des méthodes d'authentification adéquates si ce mode d'exécution est possible lors de l'exécution d'applicatifs. Enfin, ce mode d'exécution peut être présent dans un système distribué mais également dans un environnement de simulation de ce même système distribué.

L'exposé qui suit s'intéresse principalement à un seul routeur, mais il est clair que le mode d'exécution de l'arbitrage proposé par l'invention a vocation à être mis en œuvre par chacun des routeurs sur le chemin de la trame cible.

Le routeur comporte des ports d'entrée, au moins un port de sortie et une unité d'arbitrage configurée pour sélectionner une trame de données parmi une pluralité de trames de données en provenance chacune d'un port d'entrée et en concurrence de transmission par un même port de sortie. Le rôle de l'unité d'arbitrage est ainsi de choisir parmi des trames concurrentes celle qui pourra accéder et utiliser le port de sortie pour progresser dans sa transmission.

La stratégie d'arbitrage implémentée par l'unité d'arbitrage est par exemple du type tourniquet (« Round-Robin » en anglais) et consiste alors à gérer les ports d'entrée selon une file circulaire. Alternativement, elle peut être du type à priorité fixe (une priorité est alors associée à chaque trame), du type premier entré premier sorti (« First-In First-Out », FIFO), etc. L'exposé qui suit se réfère aux stratégies de type tourniquet ou de type à priorité fixe uniquement à titre d'exemples de stratégies possibles, sans que cela ne soit limitatif de l'invention.

Le procédé selon l'invention comprend, pour chaque routeur du chemin de la trame cible, une étape de spécification, pour chacun des ports d'accès du routeur, de trames de données en concurrence avec la trame de données cible pour une transmission par un port de sortie cible du routeur. Ces trames de données en concurrence sont ainsi artificiellement mises en contention avec la trame cible et doivent être systématiquement transmises avant la trame cible et cela à chaque fois que cette trame cible doit être traitée par la politique d'arbitrage du routeur et en fonction de sa stratégie d'arbitrage. On vient de telle manière contrôler le degré de contention subi par la trame cible tout en restant compatible avec la stratégie d'arbitrage.

Par exemple, si la stratégie est de type tourniquet et que le routeur dispose de n ports d'entrée, une trame cible peut être mise en contention avec jusqu'à n-1 trames en concurrence de transmission en provenance chacune d'un port d'entrée différent et différent du port d'entré de la trame cible. Si la stratégie est du type à priorité fixe et que le routeur dispose de n ports d'entrée, une trame cible peut être mise en contention avec p trames en concurrence de priorité supérieure ou égale à la priorité de la trame cible, potentiellement en provenance du même port d'entrée du routeur (port de la trame cible potentiellement inclus).

La spécification des trames de données en concurrence se déduit d'une analyse de l'ensemble des flux réseau des applications présentes dans le système distribué considéré passant par ce routeur. Pour un système distribué, on fait plus particulièrement l'hypothèse qu'il est possible de déterminer statiquement (lors de la conception de ce système) les chemins et les tailles des trames échangées entre les différentes applications présentes. Le chemin d'une trame est décrit sous la forme d'une succession de routeurs sollicités par la trame pour atteindre son nœud destinataire depuis son nœud source. Cette hypothèse d'une description statique de l'ensemble des trames est par exemple une nécessité dans le domaine des systèmes temps réel ayant des échéances temporelles strictes.

A partir de cette description statique des chemins de l'ensemble des trames, il est possible d'indiquer à chaque routeur du système distribué les trames devant être présentes sur chacun de ses ports d'entrée pour une mise en contention artificielle de manière directe avec la trame cible f_{A}. Pour ce faire, une trame en concurrence avec la trame cible est décrite par les informations d'en-tête nécessaire à sa transmission, une charge applicative unitaire fictive, typiquement un mot, et le nombre de fois que cette charge applicative doit être reproduite pour atteindre la taille de la trame qui porte ainsi une charge utile fictive.

De la même manière, pour chaque trame f_{B} en concurrence avec la trame cible f_{A}, il est nécessaire d'indiquer à chaque routeur du système distribué les trames devant artificiellement être présentes sur chacun de ses ports d'entrée pour une mise en contention de manière directe avec la trame f_{B} et cela de manière récursive pour l'ensemble des trames ajoutées de cette manière. En d'autres termes, la trame f_{B} devient elle-même une trame cible pour laquelle on vient spécifier des trames en concurrence. Cette démarche de configuration récursive permet de prendre en compte les phénomènes de contentions indirectes.

Ainsi, le procédé peut également comprendre la désignation de chaque trame de données en concurrence avec la trame cible comme une trame de données en concurrence cible, et pour chaque trame de données en concurrence cible, pour chaque routeur du chemin de la trame de données en concurrence cible, la spécification, pour chaque port d'entrée du routeur, de trames de données en concurrence avec la trame de données en concurrence cible pour une transmission par un port de sortie cible du routeur.

Il est du ressort de l'utilisateur de spécifier l'ensemble des trames en contention qui définit le degré de contention que va subir la trame cible f_{A}. Ainsi, si la spécification des trames en contention est exhaustive, le degré de contention que va subir la trame cible f_{A} est maximal et le délai de bout en bout mesuré correspondra à un délai de bout en bout pire cas. Néanmoins l'utilisateur peut volontairement spécifier une liste partielle de trames en contention afin de mesurer des délais de bout en bout avec un degré de contention plus faible et ainsi obtenir des enveloppes de délai de bout en bout en appliquant différents degrés de contention. Enfin, il est à noter que l'invention ne porte pas sur la production des trames en contention, et qu'un homme du métier peut aisément développer un outil permettant l'automatisation de la construction de ces trames.

Dans un mode de réalisation possible, à l'issue de l'étape de spécification, une structure de données *flux_en_contention* est associée à chaque port d'entrée du routeur et permet d'associer à chaque trame cible une séquence de description de trames mises en concurrence avec la trame cible. Une telle séquence de description de trames est triée pour représenter l'ordre de contention des trames de cette séquence sur la trame cible. Un index peut être associée à chaque séquence de description de trames en concurrence avec une trame cible afin de pointer sur la prochaine trame en concurrence avec la trame et d'être en mesure de déterminer la fin de cette séquence (soit implicitement avec un élément identifiable en fin de séquence, soit explicitement en ajoutant un champ représentant la taille de la séquence). Le stockage de séquences de trames en concurrence est nécessaire car la situation pire cas pour une trame cible peut en effet nécessiter plusieurs décisions d'arbitrage défavorables, i.e. non gagnées par trame cible, avant de sélectionner la trame cible.

La trame de données cible comprend un champ indicatif d'une mise en concurrence. Par exemple chaque entête d'une trame d'un flux est modifié pour inclure un bit indiquant si cette trame doit faire l'objet d'une mise en contention (noté *contention_bit).* Le positionnement de ce bit dépend des protocoles utilisés dans la transmission d'informations entre deux nœuds d'un système distribué. Par exemple, si le réseau considéré est un NoC alors la première unité de contrôle de flux FLIT (« Flow control unIT ») de chaque trame inclut un tel bit. Si le réseau considéré est basé sur Ethernet, le champ EtherType de l'entête Ethernet peut être utilisé pour contenir cette information.

A chaque port d'entrée du routeur est associée une table notée *flux_reference* qui permet à partir d'un entête de référence d'identifier le flux correspondant. Chaque trame ayant le bit *contention_bit* positionné à 1 voit son entête recherché dans cette table afin d'identifier le flux reçu. Ainsi, la présence de la trame de données cible sur un port d'accès du routeur est identifiée par reconnaissance d'un entête de référence de la trame de données cible dans une table d'entêtes de référence de trames de données associée audit port d'accès.

Les étapes du procédé selon l'invention peuvent être les suivantes pour le traitement de chaque trame entrante sur un port d'entrée P_{A} d'un routeur.
1) Si le champ *contention_bit* de l'entête de la trame entrante est positionné à 1, cet entête est comparé aux entêtes de références stockées dans la table *flux_reference* par ce port pour identifier la trame reçue. Si aucune trame n'est identifiée, une erreur est signalée via un registre d'erreur approprié et le procédé attend la réception d'une trame entrante avant de redémarrer à l'étape 1.
2) Si une trame est identifiée, l'identifiant de cette trame f_{X} est transmis à l'ensemble des autres ports d'entrée pour déterminer si des flux de ces autres ports d'entrée doivent être artificiellement mis en concurrence avec le flux fx. Pour ce faire l'identifiant fx est utilisé par chaque port d'entrée comme une clé dans la structure de données *flux_en_contention* pour identifier le prochain flux devant être transmis par chaque port d'entrée du routeur.
3) La politique d'arbitrage implémentée par l'unité d'arbitrage est surchargée pour implémenter la situation pire cas d'arbitrage pour la trame fx. Cette surcharge consiste à déterminer un port d'entrée ainsi que la trame qui devra être transmis à partir de ce port d'entrée. Par exemple, la situation pire cas pour une politique d'arbitrage de type tourniquet est de considérer que le prochain port d'entrée susceptible de transmettre une trame est le port d'entrée P_{B} situé juste après le port d'entrée P_{A} auquel est associé la trame fₓ selon l'ordre de parcours des ports d'entrée utilisé par la politique d'arbitrage du routeur. La situation pire cas pour une politique d'arbitrage à priorité fixe est de choisir systématiquement un port d'entrée ayant une trame en attente de priorité supérieure ou égale à la priorité de la trame fx.

Une politique d'arbitrage de type tourniquet nécessite de mémoriser le port d'accès sélectionné pour transmettre la trame en concurrence avec la trame fₓ afin de pouvoir repartir de ce port d'accès dans le choix du prochain port d'entrée à choisir. A contrario, une politique d'arbitrage à priorité fixe ne nécessite pas une telle mémorisation car tout port d'entrée ayant une trame de priorité supérieure ou égale à celle de la trame fₓ constitue une décision valide pour le procédé.

4) Si une trame de données fy en concurrence avec la trame de données cible existe pour le port d'entrée P_{B}, elle est alors transmise. La structure de données *flux_en_contention* de P_{B} est alors mise à jour pour que l'index de la séquence associée à fx pointe sur la prochaine trame mise en concurrence si plusieurs décisions d'arbitrage sont nécessaires pour représenter le degré de contention souhaité.

5) Les étapes 3 et 4 sont répétées jusqu'à ce que la politique d'arbitrage ne puisse plus déterminer de trames fy ayant une priorité supérieure ou égale à la trame f_{X} dans le cas d'une politique d'arbitrage à priorité fixe, ou choisisse le port P_{A} dans le cas d'une politique d'arbitrage de type tourniquet.

6) La trame fx peut alors être transmise et, sur chaque port d'entrée, la séquence de description de trames mises en concurrence avec la trame fx voit son index repositionné sur la tête de cette séquence pour être prise en compte lors d'une prochaine instance de la trame fx.

Ainsi, le procédé selon l'invention comprend, suite à l'étape de spécification, la transmission de la trame de données cible et des trames de données en concurrence et la mesure d'un temps de transmission de bout en bout de la trame de données cible sur son chemin. La transmission de la trame de données cible comprend à chaque routeur de son chemin :
- en présence de la trame de données cible sur un port d'accès du routeur, la sélection, par l'unité d'arbitrage, d'une ou plusieurs trames de données en concurrence; et
- à la transmission par le port de sortie cible de la ou des trames de données en concurrence sélectionnées avant la transmission de la trame de données cible.

La mesure du temps de transmission de bout en bout de la trame cible entre une date d'émission par le nœud source et une date de réception par le nœud destinataire est réalisée par toute technique connue de l'homme de l'art et n'est pas décrite plus en détail ici. Un horodatage matériel peut notamment être réalisé à cet effet, en utilisant par exemple le protocole de synchronisation d'horloge IEEE 1588.

Lorsque l'unité d'arbitrage est configurée pour réaliser un arbitrage de type tourniquet, une trame de données en concurrence sélectionnée est une trame de données en concurrence associée à un port d'accès qui suit le port d'accès associé à la trame de données cible dans le tourniquet.

Et lorsque l'unité d'arbitrage est configurée pour réaliser un arbitrage de type à priorité fixe tourniquet, la ou les trames de données en concurrence sélectionnées sont des trames de données en concurrence présentant un niveau de priorité supérieur à un niveau de priorité de la trame de données cible.

Par ailleurs lors que les phénomènes de contention indirecte sont pris en compte, la transmission de chaque trame de données en concurrence cible comprend à chaque routeur sur son chemin :
i) en présence de la trame de données en concurrence cible sur un port d'entrée du routeur, la sélection d'une ou plusieurs trames de données en concurrence avec la trame de données en concurrence cible; et
ii) la transmission par le port de sortie cible de la ou des trames de données en concurrence sélectionnées avant la transmission de la trame de données en concurrence cible.

On décrit dans ce qui suit un exemple de mise en œuvre du procédé selon l'invention au niveau d'un routeur R comprenant trois ports d'entrée P1, P2 et P3 et un port de sortie PS. La trame cible est la trame f_{A} entrante sur le port P1. Suivant l'étape de spécification, les trames f_{B} et fc sont artificiellement mises en concurrence avec la trame cible f_{A} sur le port P2, et la trame f_{D} est artificiellement mise en concurrence avec la trame cible f_{A} sur le port P3.

La trame cible f_{A} contient un entête dans laquelle le bit *contention_bit* est positionné à 1 déclenchant l'étape 1 ci-dessus. Les flux f_{B}, fc et f_{D} sont alors identifiés comme devant être mis en contention avec f_{A}, respectivement sur les ports P2 (pour f_{B} et fc) et P3 (pour f_{D}).

La politique d'arbitrage implémentée par l'unité d'arbitrage est du type tourniquet. Les ports d'entrées du routeur sont numérotés selon l'ordre de parcours par la politique d'arbitrage, i.e. un index pointe sur le port d'entrée courant qui est simplement incrémenté à chaque décision d'arbitrage pour éviter une monopolisation d'un port de sortie par un port d'entrée.

A l'étape 3 du procédé, cet index est positionné sur le port d'entrée P2, correspondant au pire cas pour cette politique d'arbitrage. Une première décision d'arbitrage est prise et la trame f_{B} est transmise sur le port de sortie PS (#1 sur la figure 1). La séquence en contention depuis le port d'entrée P2 pour la trame cible f_{A} est mise à jour pour pointer sur le prochain flux à mettre en contention sur le port d'entrée P2, en l'occurrence la trame fc. L'index de l'unité d'arbitrage est alors positionné au prochain port d'entrée, en l'occurrence le port P3. Une nouvelle décision d'arbitrage est alors prise engendrant la transmission de la trame f_{D} (étapes 3 et 4 ; #2 sur la figure 1). L'index de l'unité d'arbitrage est alors positionné au prochain port d'entrée, en l'occurrence le port P1. Une dernière décision d'arbitrage est alors prise engendrant cette fois la transmission de la trame cible f_{A} (étape 6 du procédé ; #3 sur la figure 1). Lors d'une prochaine mise en contention de la trame f_{A}, lorsque l'index sera positionné sur le port d'entrée P2, la décision d'arbitrage engendrera la transmission de la trame fc.

Nous illustrons maintenant la différence lorsque la politique d'arbitrage est à priorité fixe, en faisant l'hypothèse que la trame f_{B} est de priorité supérieure à la priorité de la trame fc qui est elle-même de priorité supérieure à la priorité de la trame f_{D} qui est elle-même de priorité supérieures à la priorité de la trame f_{A}. La différence réside dans le fait que les deux premières décisions d'arbitrages engendrent la transmission successive des trames f_{B} et fc alors qu'elles sont issues du même port d'entré P2. Puis, la troisième décision d'arbitrage engendre la transmission de la trame f_{D} et la quatrième décision d'arbitrage engendre la transmission de la trame f_{A}.

## Revendications

1. Procédé de transmission de trames de données chacune sur un chemin comprenant au moins un routeur (R) qui comporte des ports d'entrée (P1, P2, P3), au moins un port de sortie (PS) et une unité d'arbitrage (UA) configurée pour sélectionner une trame de données parmi une pluralité de trames de données en provenance chacune d'un port d'entrée et en concurrence de transmission par un même port de sortie, le procédé comprenant les étapes suivantes :
a) pour chaque routeur du chemin d'une trame de données cible (f_{A}), spécification, pour chacun des ports d'entrée du routeur, de trames de données en concurrence (f_{B}, f_{C}) avec la trame de données cible pour une transmission par un port de sortie cible du routeur et association, à chacun des ports d'entrée, d'une séquence de description desdites trames de données en concurrence;
b) transmission de la trame de données cible et des trames de données en concurrence et mesure d'un temps de transmission de bout en bout de la trame de données cible sur le chemin, la transmission de la trame de données cible comprenant pour chaque routeur du chemin :
i) en présence de la trame de données cible (f_{A}) sur un port d'entrée du routeur (P1), la transmission d'un identifiant de la trame de données cible à l'ensemble des autres ports d'entrée pour déterminer si des trames de données de ces autres ports d'entrée sont en concurrence avec la trame de données cible et la sélection, par l'unité d'arbitrage, d'une ou plusieurs trames de données en concurrence (f_{B}); et
ii) la transmission (#1, #2) par le port de sortie cible (PS) de la ou des trames de données en concurrence sélectionnées (f_{B}) avant la transmission (#3) de la trame de données cible.

2. Procédé selon la revendication 1, dans lequel l'étape de spécification est réalisée de manière à engendrer la transmission de la trame de données cible selon un délai de transmission de bout en bout pire cas.

3. Procédé selon l'une des revendications 1 et 2, dans lequel l'unité d'arbitrage est configurée pour implémenter une politique d'arbitrage du type tourniquet et dans lequel une trame de données en concurrence sélectionnée est une trame de données en concurrence associée à un port d'accès (P2) qui suit le port d'accès (P1) associé à la trame de données cible dans le tourniquet.

4. Procédé selon l'une des revendications 1 et 2, dans lequel l'unité d'arbitrage est configurée pour implémenter une politique d'arbitrage du type à priorité fixe et dans lequel la ou les trames de données en concurrence sélectionnée sont des trames de données en concurrence présentant un niveau de priorité supérieur à un niveau de priorité de la trame de données cible.

5. Procédé selon l'une des revendications 1 à 4, dans lequel les trames de données en concurrence portent une charge utile fictive.

6. Procédé selon l'une des revendications 1 à 5, dans lequel la présence de la trame de données cible sur un port d'accès du routeur est identifiée par reconnaissance d'un entête de référence de la trame de données cible dans une table d'entêtes de référence de trames de données associée audit port d'accès.

7. Procédé selon l'une des revendications 1 à 6, dans lequel la trame de données cible comprend un champ indicatif d'une mise en concurrence.

8. Procédé selon l'une des revendications 1 à 7 dans lequel les trames de données en concurrence sont chacune transmises sur un chemin comprenant au moins un routeur, comprenant :
a) la désignation de chaque trame de données en concurrence comme une trame de données en concurrence cible ;
b) pour chaque trame de données en concurrence cible, pour chaque routeur du chemin de la trame de données en concurrence cible, la spécification, pour chaque port d'entrée du routeur, de trames de données en concurrence avec la trame de données en concurrence cible pour une transmission par un port de sortie cible du routeur ; et
c) dans lequel la transmission de chaque trame de données en concurrence cible comprend à chaque routeur sur son chemin :
i) en présence de la trame de données en concurrence cible sur un port d'entrée du routeur, la sélection d'une ou plusieurs trames de données en concurrence avec la trame de données en concurrence cible présentes sur ledit port d'entrée ; et
ii) la transmission par le port de sortie cible de la ou des trames de données en concurrence sélectionnées avant la trame de donnée en concurrence cible.

## Patentansprüche

1. Verfahren zum Übertragen von Datenrahmen jeweils auf einem Pfad, der mindestens einen Router (R) umfasst, welcher Eingangsports (P1, P2, P3), mindestens einen Ausgangsport (PS) und eine Schlichtungseinheit (UA) umfasst, die so konfiguriert ist, dass sie einen Datenrahmen aus einer Vielzahl von Datenrahmen, die jeweils von einem Eingangsport kommen und um Übertragung durch ein und denselben Ausgangsport konkurrieren, auswählt, wobei das Verfahren die folgenden Schritte umfasst:
a) für jeden Router des Pfades eines Ziel-Datenrahmens (f_{A}), Spezifizieren, für jeden der Eingangsports des Routers, von Datenrahmen (f_{B}, fc), die mit dem Ziel-Datenrahmen um Übertragung durch einen Ziel-Ausgangsport des Routers konkurrieren, und Zuordnen einer Sequenz zur Beschreibung der konkurrierenden Datenrahmen zu jedem der Eingangsports;
b) Übertragen des Ziel-Datenrahmens und der konkurrierenden Datenrahmen und Messen einer Ende-zu-Ende-Übertragungszeit des Ziel-Datenrahmens auf dem Pfad, wobei das Übertragen des Ziel-Datenrahmens bei jedem Router des Pfades umfasst:
i) bei Vorliegen des Ziel-Datenrahmens (f_{A}) an einem Eingangsport des Routers (P1), Übertragen einer Kennung des Ziel-Datenrahmens an alle anderen Eingangsports, um zu bestimmen, ob Datenrahmen dieser anderen Eingangsports mit dem Ziel-Datenrahmen konkurrieren, und Auswählen von einem oder mehreren konkurrierenden Datenrahmen (f_{B}) durch die Schlichtungseinheit; und
ii) Übertragen (#1, #2) des oder der ausgewählten konkurrierenden Datenrahmen (f_{B}) durch den Ziel-Ausgangsport (PS) vor Übertragen (#3) des Ziel-Datenrahmens.

2. Verfahren nach Anspruch 1, wobei der Schritt des Spezifizierens so ausgeführt wird, dass die Übertragung des Ziel-Datenrahmens gemäß einer Worst-Case-Ende-zu-Ende-Übertragungsverzögerung bewirkt wird.

3. Verfahren nach einem der Ansprüche 1 und 2, wobei die Schlichtungseinheit so konfiguriert ist, dass sie eine Schlichtungspolitik vom Typ Drehkreuz implementiert, und wobei es sich bei einem ausgewählten konkurrierenden Datenrahmen um einen konkurrierenden Datenrahmen handelt, der einem Eingangsport (P2) zugeordnet ist, welcher im Drehkreuz auf den Eingangsport (P1), der dem Ziel-Datenrahmen zugeordnet ist, folgt.

4. Verfahren nach einem der Ansprüche 1 und 2, wobei die Schlichtungseinheit so konfiguriert ist, dass sie eine Schlichtungspolitik vom Typ mit fester Priorität implementiert, und wobei es sich bei dem oder den ausgewählten konkurrierenden Datenrahmen um konkurrierende Datenrahmen handelt, die eine Prioritätsstufe aufweisen, welche höher ist als eine Prioritätsstufe des Ziel-Datenrahmens.

5. Verfahren nach einem der Ansprüche 1 bis 4, wobei die konkurrierenden Datenrahmen eine fiktive Nutzlast tragen.

6. Verfahren nach einem der Ansprüche 1 bis 5, wobei das Vorliegen des Ziel-Datenrahmens an einem Eingangsport des Routers durch Erkennen eines Referenz-Headers des Ziel-Datenrahmens in einer Tabelle von Referenz-Headern von Datenrahmen, die dem Eingangsport zugeordnet sind, identifiziert wird.

7. Verfahren nach einem der Ansprüche 1 bis 6, wobei der Ziel-Datenrahmen ein Feld umfasst, das ein Konkurrieren anzeigt.

8. Verfahren nach einem der Ansprüche 1 bis 7, wobei die konkurrierenden Datenrahmen jeweils auf einem Pfad übertragen werden, der mindestens einen Router umfasst, umfassend:
a) Bezeichnen jedes konkurrierenden Datenrahmens als konkurrierenden Ziel-Datenrahmen;
b) für jeden konkurrierenden Ziel-Datenrahmen, für jeden Router des Pfades des konkurrierenden Ziel-Datenrahmens, Spezifizieren, für jeden Eingangsport des Routers, von Datenrahmen, die mit dem konkurrierenden Ziel-Datenrahmen um Übertragung durch einen Ziel-Ausgangsport des Routers konkurrieren; und
c) wobei das Übertragen jedes konkurrierenden Ziel-Datenrahmens an jedem Router auf seinem Pfad umfasst:
i) bei Vorliegen des konkurrierenden Ziel-Datenrahmens an einem Eingangsport des Routers, Auswählen von einem oder mehreren an dem Eingangsport vorliegenden Datenrahmen, die mit dem konkurrierenden Ziel-Datenrahmen konkurrieren; und
ii) Übertragen des oder der ausgewählten konkurrierenden Datenrahmen durch den Ziel-Ausgangsport vor dem konkurrierenden Ziel-Datenrahmen.

## Claims

1. A method for transmitting data frames each on a path comprising at least one router (R) which includes input ports (P1, P2, P3), at least one output port (PS) and an arbitration unit (UA) configured to select a data frame from a plurality of data frames each coming from an input port and competing for transmission through a same output port, the method comprising the following steps of:
a) for each router in the path of a target data frame (f_{A}), specifying, for each of the input ports of the router, competing data frames (f_{B}, fc) with the target data frame for transmission through a target output port of the router and associating, with each of the input ports, a sequence of description of said competing data frames;
b) transmitting the target data frame and the competing data frames and measuring an end-to-end transmission time of the target data frame on the path, transmitting the target data frame comprising for each router in the path:
i) in the presence of the target data frame (f_{A}) on a router input port (P1), transmitting an identifier of the target data frame to all other input ports to determine if data frames from these other input sports are competing with the target data frame and selecting, by the arbitration unit, one or more competing data frames (f_{B}); and
ii) transmitting (#1, #2) through the target output port (PS) the one or more competing data frames (f_{B}) selected prior to transmitting (#3) the target data frame.

2. The method according to claim 1, wherein the specifying step is performed so as to result in the transmission of the target data frame according to an end-to-end worst case transmission delay.

3. The method according to one of claims 1 and 2, wherein the arbitration unit is configured to implement a round-robin type arbitration policy and wherein a competing data frame selected is a competing data frame associated with an access port (P2) that follows the access port (P1) associated with the target data frame in the round-robin.

4. The method according to one of claims 1 and 2, wherein the arbitration unit is configured to implement a fixed priority type arbitration policy and wherein the selected competing data frame(s) are competing data frames having a priority level higher than a priority level of the target data frame.

5. The method according to one of claims 1 to 4, wherein the competing data frames carry a dummy payload.

6. The method according to one of claims 1 to 5, wherein the presence of the target data frame on an access port of the router is identified by recognising a reference header of the target data frame in a data frame reference header table associated with said access port.

7. The method according to one of claims 1 to 6, wherein the target data frame comprises a field indicative of a competitive process.

8. The method according to one of claims 1 to 7, wherein the competing data frames are each transmitted on a path comprising at least one router, comprising:
a) designating each competing data frame as a target competing data frame;
b) for each target competing data frame, for each router in the path of the target competing data frame, specifying, for each input port of the router, data frames competing with the target competing data frame for transmission through a target output port of the router; and
c) wherein transmitting each target competing data frame comprises at each router on its path:
i) in the presence of the target competing data frame on an input port of the router, selecting one or more data frames competing with the target competing data frame present on said input port; and
ii) transmitting, through the target output port, the one or more competing data frames selected before the target competing data frame.
